**Europäisches Patentamt**

(19) **European Patent Office**

**Office européen des brevets**

(11) Publication number : **0 370 747 B1**

# (12) EUROPEAN PATENT SPECIFICATION

(45) Date of publication of patent specification : **19.05.93 Bulletin 93/20**

(51) Int. Cl.⁵ : **B60C 11/06**

(21) Application number : **89312037.8**

(22) Date of filing : **21.11.89**

(54) **Pneumatic tyre.**

(30) Priority : **21.11.88 JP 150733/88**

(43) Date of publication of application :
**30.05.90 Bulletin 90/22**

(45) Publication of the grant of the patent :
**19.05.93 Bulletin 93/20**

(84) Designated Contracting States :
**DE FR GB**

(56) References cited :
**FR-A- 2 227 965**
**FR-A- 2 484 924**
**FR-A- 2 608 516**
**GUMMIBEREIFUNG. vol. 50, no. 2, February 1974, BIELEFELD DE page 22 "Steelcord Transport 1000"**

(73) Proprietor : **SUMITOMO RUBBER INDUSTRIES LIMITED**
**No. 1-1, Tsutsui-cho 1-chome**
**Chuo-ku Kobe-shi Hyogo 651 (JP)**

(72) Inventor : **Sugihara, Hideaki**
**2-1-918 Motoyamaminami-cho, 6-chome**
**Higashinada-ku, Kobe-shi, Hyogo (JP)**

(74) Representative : **Stewart, Charles Geoffrey**
**SP TYRES UK LIMITED Tyre Technical Division**
**Fort Dunlop Birmingham B24 9QT (GB)**

EP 0 370 747 B1

Jouve, 18, rue Saint-Denis, 75001 PARIS

## Description

This invention relates to a pneumatic tyre.

During high-speed running of a vehicle on a wet paved road, water sometimes is not satisfactorily discharged from the area of contact between the tyre and the road surface which reduces the coefficient of friction between the tread of the tyre and the road surface. This increases the risk of accident due to slip of the tyre. For this reason, as shown in Figure 4, a plurality of parallel grooves GR called "rain grooves" are often formed in the road surface extending in the direction of running of the vehicle to ensure that the water can be discharged from the area of contact between the tyre T and the road surface R.

Also in order to ensure water discharge ability, grooves GT are formed in the tread surface of the tyre T and each extends continuously in the direction of the circumference of the tyre. Therefore, during running of the vehicle on a road surface having rain grooves GR, the edges of several of the peripheral grooves GT in the tread surface of the tyre T are simultaneously engaged in the rain grooves GR. This causes a phenomenon where the vehicle sways from side to side which is called "groove wander" in the tread. Such a groove wander phenomenon affects the stability in running straight and causes the driver to feel uneasy and also affects the steerability.

A known tyre according to the preamble of claim 1 is shown, e.g. in FR-A-2 484 924.

It is therefore an object of this invention to provide a pneumatic tyre which prevents the groove wander phenomenon and improves running stability and steerability on a road surface having rain grooves.

According to the present invention, there is provided a pneumatic tyre having a pair of main grooves formed in the surface of the tread of the tyre each extending continuously in the direction of the circumference of the tyre, the pair of main grooves being disposed respectively on opposite sides of the equatorial plane of the tyre and spaced substantially equidistantly from the equatorial plane, each of the main grooves having a width of not less than 5 mm, the tread having a centre rib lying between the pair of main grooves, there being provided a pair of sub-grooves formed in the centre rib and each extending continuously in the circumferential direction of the tyre, so that the centre rib is divided by the pair of sub-grooves into a central sub-rib and a pair of side sub-ribs disposed respectively on opposite sides of the central sub-rib, each of the sub-grooves having a width of not more than 5 mm, and the following relations being established:

$$43 \text{ mm} < A < 49 \text{ mm} \quad (1)$$
$$D1 = D2 = D \quad (2)$$
$$C = B - 2D \quad (3)$$
$$2/9 < D/B < 4/9 \quad (4)$$
$$HS \geqq 0.5 \times HM \quad (5)$$

where A is the distance between the pair of main grooves in the direction of the axis of the tyre, B represents the width of the centre rib in the direction of the axis of the tyre, D1 and D2 respectively represent with widths of the pair of side sub-ribs in the direction of the axis of the tyre, C represents the width of the central sub-rib in the direction of the axis of the tyre, HM represents the depth of each of the main grooves, and HS represents the depth of each of the sub-grooves.

Since the pneumatic tyre of this construction has two main grooves, the number of edges provided in the area of the tread surface is reduced, and therefore the groove wander phenomenon is much less liable to occur while securing a good wet grip ability.

Since the centre rib is divided into three sections, the crown portion of the tyre is reduced to a suitable degree. This reduces the force produced when the edges of the main grooves engage rain grooves in a road surface, thereby still more preventing the groove wander phenomenon from occurring.

The restrictions that "43 mm < A < 49 mm" and "2/9 < D/B < 4/9" provide suitable rigidities for the three sub-ribs thereby preventing steering stability and wear resistance of the tyre from being adversely affected.

The restriction that "HS > 0.5 x HM" provides good wet grip and the rigidity of the crown portion of the tyre is reduced so as to reduce the force produced when the edges are engaged in rain grooves, thereby preventing the groove wander phenomenon from occurring.

Further aspects of the present invention will be apparent from the following description, by way of example only, of embodiments in conjunction with the attached diagrammatic drawings in which:-

Figure 1 is a cross-sectional view of a portion of a pneumatic tyre according to the present invention, taken along the plane in which the axis of rotation of the tyre lies;

Figure 2 is an enlarged cross-sectional view of an important portion of the tyre;

Figure 3 is an illustration showing the results of tests using an automobile; and

Figure 4 is an enlarged cross-sectional view of an important portion of a conventional tyre in contact with a road surface.

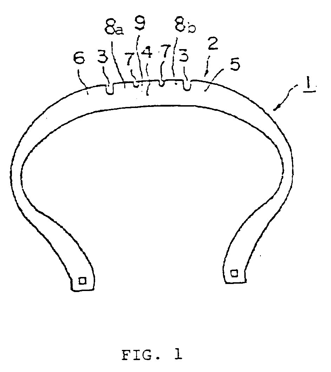

Figure 1 shows a pneumatic tyre 1 having a pair of main grooves 3 in a surface of a tread 2 and each extending continuously in the direction of the circumference of the tyre. The pair of main grooves 3 are disposed respectively on opposite sides of the equatorial plane of the tyre 1 and spaced substantially equidistantly therefrom. Each of the two main grooves 3 has a width not less than 5 mm. The tread 2 is thus divided by the two main grooves 3 into a centre rib 4 and two side portions 5 and 6 disposed respectively on opposite sides of the centre rib 4.

Thus the number of edges present on the surface of the tread 2 is reduced, and therefore the groove wander phenomenon, which develops due to the engagement of the edges of the main grooves 3 in the rain grooves GR, is much less liable to occur. If there is provided only one main groove 3, the ability of the tyre 1 to grip a wet road surface (hereinafter referred to as "wet grip ability") is inadequate. The provision of the two main grooves 3 ensures an adequate wet grip ability for the tyre.

A pair of sub-grooves 7 are formed in the centre rib 4 lying between the pair of main grooves 3 and each extends continuously in the direction of the circumference of the tyre 1. Each sub-groove 7 has a width of not more than 5 mm. Thus, the centre rib 4 is divided by the two sub-grooves 7 into three sections, that is, a central sub-rib 9 and two side sub-ribs 8a and 8b disposed respectively on the opposite sides of the central sub-rib 9. Each of the three sub-ribs 8a, 8b and 9 extends straightly in the direction of the circumference of the tyre 1.

With this construction, the rigidity of the crown portion of the tyre is reduced. Therefore, the force produced when the edges of the main grooves 3 are engaged respectively in rain grooves GR is small, and no significant lateral force to affect the running of the tyre 1 is generated. As a result, the groove wander phenomenon is much less liable to occur. If the centre rib 4 is divided into two sections, the rigidity of the crown portion of the tyre 1 is not reduced to a satisfactory level, so that the groove wander phenomenon can not be prevented efficiently. Also, if the centre rib 4 is divided into more than three section, the rigidity of the crown portion is excessively reduced, which adversely affects the steerability.

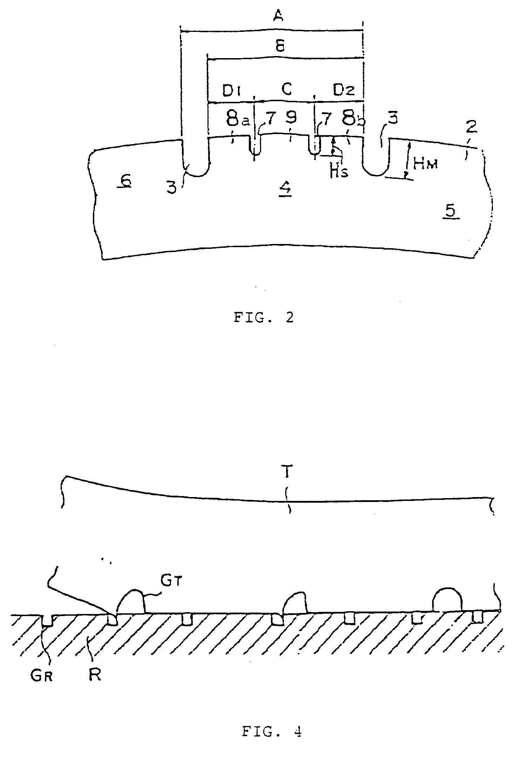

In Figure 2, the width D1 of the left-hand side sub-rib 8a which extends in the direction of the axis of the tyre 1 between that edge of the left-hand main groove 3 close to the equatorial plane of the tyre and the centreline of the left-hand sub-rib 7 is equal to the width D2 of the right-hand side sub-rib 8b which extends in the direction of the axis of the tyre 1 between that edge of the right-hand main groove 3 close to the equatorial plane of the tyre 1 and the centreline of the right-hand sub-rib 7. This relation can be expressed by the formula D1 = D2 = D. The distance between the centrelines of the two sub-grooves 7 is measured to obtain the width C of the central sub-rib 9 in the direction of the axis of the tyre 1.

The distance A between the two main grooves 3 in the direction of the axis of the tyre 1 is obtained by measuring the distance between that edge of one of the two main grooves 3 close to the equatorial plane of the tyre 1 and that edge of the other main groove 3 remote from the equatorial plane. The width B of the centre rib 4 in the direction of the axis of the tyre 1 is obtained by measuring the distance between those edges of the two main grooves 3 close to the equatorial plane of the tyre 1.

With respect to the distance A between the two main grooves 3 in the axial direction of the tyre 1, the width B of the centre rib 4 in the axial direction of the tyre 1 and the width of each of the side sub-ribs 8a and 8b in the axial direction of the tyre 1, the following formulae are necessary:

$$43 \text{ mm} < A < 49 \text{ mm} \quad (1)$$
$$C = B - 2D \quad (2)$$
$$2/9 < D/B < 4/9 \quad (3)$$

The relation between the depth HM of the main groove 3 and the depth HS of the sub-groove 7 is expressed by the following formula:

$$HS \geqq 0.5 \times HM \quad (4)$$

The relation between the four formulae (1) to (4) will now be described.

If the distance A is in the range specified in formula (1), the centre rib 4 is prevented from having an excessive rigidity at the surface of the tyre tread 2, thereby ensuring that the groove edge portions have the optimum rigidities. If the distance A is equal to or smaller than 43 mm (A $\leqq$ 43 mm), the rigidity of the centre rib is unduly reduced, so that other performance parameters such as wear resistance and steering stability are adversely affected. On the other hand, if the distance A is equal to or greater than 49 mm (A $\geqq$ 49 mm), the rigidity of the centre rib 4 is unduly increased, so that the drag at the edge portion is excessively increased. As a result, the groove wander phenomenon is liable to occur, and the wet grip performance is adversely affected.

Formula (2) will be readily appreciated from the foregoing description.

Formula (3) is provided in order to secure a good appearance of the tread pattern and also to make the rigidity of the tyre crown portion uniform over the entire region thereof to achieve a balance of the rigidity. If "D/B" is equal to or smaller than 2/9 (D/B $\leqq$ 2/9), the rigidity of the side sub-ribs 8a and 8b is excessively reduced, so that steering stability and wear resistance are adversely affected. On the other hand, if "D/B" is equal to or greater than 4/9 (D/B $\geqq$ 4/9), the rigidity of the central sub-rib 9 is excessively reduced, so that steering stability and wear resistance are affected adversely.

Formula (4) is provided in order to ensure a good wet grip performance and also to reduce the rigidity of the crown portion of the tyre to reduce the force produced when the edges of the main grooves 3 are engaged in rain grooves GR to thereby prevent the groove wander phenomenon from occurring. If "HS" is equal to or smaller than 0.5 HM (HS $\leqq$ 0.5 $\times$ HM), the water discharge ability is not adequate, and the wet grip performance (particularly the wet grip performance at a stage when the wear approaches its limit) is lowered, and the rigidity of the centre rib 4 is not sufficiently reduced to prevent the groove wander phenomenon from occurring.

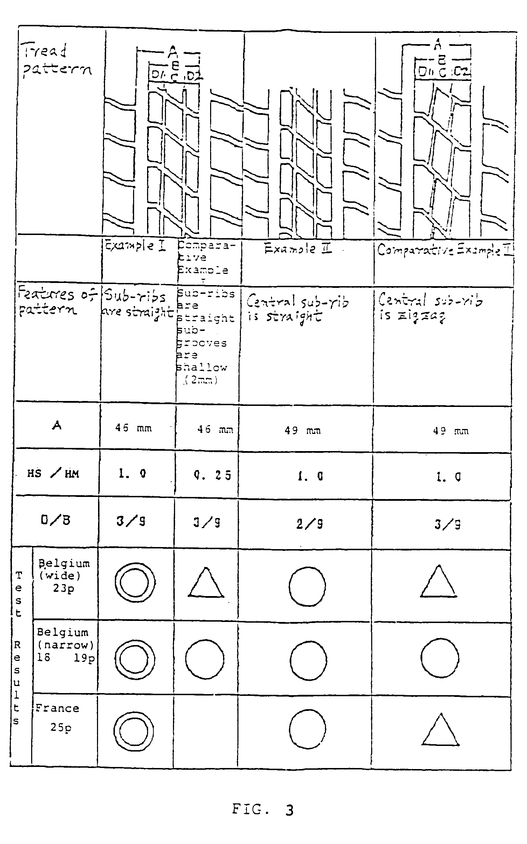

Figure 3 shows the results of tests in which tyres attached to an automobile were actually tested on roads. Tyres of Example I and Example II meeting the above-mentioned requirements of the present invention exhibited very good results on roads of the type used in France and in Belgium having rain grooves, which did not cause any groove wander phenomenon. With respect to a tyre of Comparative Example I, the depth of sub-grooves 7 was small (2 mm), and hence the relevant relation was expressed by "HS/HM ≦ 0.5". For this reason, the rigidity of the centre rib 4 was not sufficiently reduced to prevent the groove wander phenomenon from occurring, and the occurrence of such phenomenon was not prevented particularly on the Belgian-type road having rain grooves at a wide pitch.

The tyre of Comparative Example II, in which a central sub-rib 9 was formed into a zigzag configuration, also failed to prevent the groove wander phenomenon from occurring on the French- and Belgian-type roads both having rain grooves with a wide pitch. The reason for this is that the rigidity of the centre rib 4 was increased because of the zigzag configuration of the central sub-rib 9.

The pneumatic tyre 1 of the present invention having the above-mentioned features achieves the following advantages:

Since the tyre 1 has the two main grooves 3 its wet grip performance is better than that achieved by a conventional tyre having only one main groove. In addition, the number of the edges on the tread 2 is reduced, and therefore the groove wander phenomenon, developing as a result of the engagement of the edges of the main grooves 3 in the rain grooves GR, is much less liable to occur.

Since the centre rib 4 is divided by the two sub-grooves 7 into three sections, the rigidity of the tyre crown portion is reduced to a suitable degree. This reduces the force produced when the edges of the main grooves 3 are engaged in the rain grooves GR, thereby preventing the groove wander phenomenon from occurring.

By specifying "43mm < A < 49 mm", the centre rib 4 has a suitable degree of rigidity, and the occurrence of the groove wander phenomenon is prevented. In addition, adverse effects on other performances are prevented.

By specifying "2/9 < D/B < 4/9", a good appearance of the tread pattern is secured, and the rigidity of the crown portion is kept uniform to provide a balance of the rigidity, thereby improving the steering stability and the wear resistance.

By specifying "HS ≧ 0.5HM", the rigidity of the centre rib 4 is reduced to a suitable level to reduce the force produced when the edges of the main grooves 3 are engaged in the rain grooves GR, thereby preventing the groove wander phenomenon from occurring.

Although the features of the present tyre 1 have thus been described above independently of one another, the tyre, having all of these features together has a better wet grip performance, and positively prevents the groove wander phenomenon from occurring, and improves the steering stability and the wear resistance.

## Claims

1. A pneumatic tyre having a pair of main grooves (3) formed in the surface of the tread (2) of the tyre (1) and each extending continuously in the direction of the circumference of the tyre, said pair of main grooves (3) being disposed respectively on opposite sides of the equatorial plane of the tyre (1) and spaced substantially equidistantly from said equatorial plane, each of said main grooves (3) having a width not less than 5 mm, said tread (2) having a centre rib (4) lying between said pair of main grooves (3), a pair of sub-grooves (7) formed in said centre rib (4) each extending continuously in the circumferential direction of the tyre, so that said centre rib (4) is divided by said pair of sub-grooves (7) into a central sub-rib (9) and a pair of side sub-ribs (8a,8b) disposed respectively on opposite sides of said central sub-rib (9), characterised by each of said sub-grooves (7) having a width of not more than 5 mm, and the following relations being established:

$$43 \text{ mm} < A < 49 \text{ mm} \quad (1)$$
$$D1 = D2 = D \quad (2)$$
$$C = B - 2D \quad (3)$$
$$2/9 < D/B < 4/9 \quad (4)$$
$$HS \geqq 0.5 \times HM \quad (5)$$

where A represents the distance between the pair of main grooves (3) in the direction of the axis of the tyre, B represents the width of the centre rib in the direction of the axis of the tyre, D1 and D2 respectively represent the widths of the pair of side sub-ribs (8a,8b) in the direction of the axis of the tyre, C represents the width of the central sub-rib (9) in the direction of the axis of the tyre, HM represents the depth of each of the main grooves (3), and HS represents the depth of each of the sub-grooves (7).

2. A pneumatic tyre according to claim 1 characterised in that each of said sub-grooves (7) extend straightly in the circumferential direction.

## Patentansprüche

1. Luftreifen mit zwei Hauptrillen (3), die in der Oberfläche der Lauffläche (2) des Reifens (1) gebildet sind und von denen sich jede kontinuierlich in Umfangsrichtung des Reifens erstreckt, wobei die zwei Hauptrillen (3) entsprechend auf gegenüberliegenden Seiten der Äquatorebene des Reifens (1) angeordnet sind und im wesentlichen äquidistant von der Äquatorebene beabstandet sind, jede der Hauptrillen (3) eine Breite aufweist, die nicht weniger als 5 mm beträgt, die Lauffläche (2) eine Zentralrippe (4) aufweist, die zwischen den zwei Hauptrillen (3) liegt, mit zwei Nebenrillen (7), die in der Zentralrippe (4) gebildet sind, wobei sich jede kontinuierlich in Umfangsrichtung des Reifens erstreckt, so daß die Zentralrippe (4) durch die zwei Nebenrillen (7) in eine Zentralnebenrippe (9) und zwei Seitennebenrippen (8a, 8b) geteilt ist, die entsprechend auf gegenüberliegenden Seiten der Zentralnebenrippe (9) angeordnet sind,

dadurch **gekennzeichnet,** daß

jede der Nebenrillen (7) eine Breite von nicht mehr als 5 mm aufweist und den folgenden festgesetzten Beziehungen genügt:

$$43 \text{ mm} < A < 49 \text{ mmm} \quad (1)$$
$$D1 = D2 = D \quad (2)$$
$$C = B - 2D \quad (3)$$
$$2/9 < D/B < 4/9 \quad (4)$$
$$HS \cong 0.5 \times HM \quad (5)$$

wobei A den Abstand zwischen den zwei Hauptrillen (3) in Achsrichtung des Reifens darstellt, B die Breite der Zentralrippe in Achsrichtung des Reifens darstellt, D1 und D2 entsprechend die Breiten der zwei Seitennebenrippen (8a, 8b) in Achsrichtung des Reifens darstellen, C die Breite der Zentralnebenrippe (9) in Achsrichtung des Reifens darstellt, HM die Tiefe einer jeden Hauptrille (3) darstellt und HS die Tiefe einer jeden Nebenrille (7) darstellt.

2. Luftreifen nach Anspruch 1,
dadurch **gekennzeichnet,**
daß jede Nebenrille (7) sich in Umfangsrichtung gerade erstreckt.

## Revendications

1. Pneumatique ayant une paire de gorges principales (3) formées à la surface de la bande de roulement (2) du pneumatique (1) et disposées chacune de façon continue dans la direction de la circonférence du pneumatique, les deux gorges principales (3) étant disposées de part et d'autre du plan équatorial du pneumatique (1) et étant pratiquement équidistantes du plan équatorial, chacune des gorges principales (3) ayant une largeur qui n'est pas inférieure à 5 mm, la bande de roulement (2) ayant une nervure centrale (4) disposée entre les deux gorges principales (3), une paire de gorges secondaires (7) formées dans la nervure centrale (4) et disposées chacune de façon continue dans la direction circonférentielle du pneumatique, si bien que la nervure centrale (4) est divisée par les deux gorges secondaires (7) en un tronçon central (9) et deux tronçons latéraux (8a, 8b) disposés respectivement de part et d'autre du tronçon central (9), caractérisé en ce que chacune des gorges secondaires (7) a une largeur qui ne dépasse pas 5 mm, et les conditions suivantes sont remplies :

$$43 \text{ mm} < A < 49 \text{ mm} \quad (1)$$
$$D1 = D2 = D \quad (2)$$
$$C = B - 2D \quad (3)$$
$$2/9 < D/B < 4/9 \quad (4)$$
$$HS \cong 0.5 \times HM \quad (5)$$

A représentant la distance comprise entre les deux gorges principales (3) dans la direction de l'axe du pneumatique, B représentant la largeur de la nervure centrale dans la direction de l'axe du pneumatique, D1 et D2 représentant respectivement les largeurs des deux tronçons latéraux (8a, 8b) dans la direction de l'axe du pneumatique, C représentant la largeur du tronçon central (9) dans la direction de l'axe du pneumatique, HM représentant la profondeur de chacune des gorges principales (3), et HS représentant la profondeur de chacune des gorges secondaires (7).

2. Pneumatique selon la revendication 1, caractérisé en ce que chacune des gorges secondaires (7) est disposée de manière rectiligne dans la direction circonférentielle.

FIG. 1

FIG. 2

FIG. 4

| Tread pattern | | | | |
|---|---|---|---|---|
| | Example I | Comparative Example I | Example II | Comparative Example II |
| Features of pattern | Sub-ribs are straight | Sub-ribs are straight sub-grooves are shallow (2mm) | Central sub-rib is straight | Central sub-rib is zigzag |
| A | 46 mm | 46 mm | 49 mm | 49 mm |
| HS / HM | 1. 0 | 0. 2 5 | 1. 0 | 1. 0 |
| D / B | 3 / 9 | 3 / 9 | 2 / 9 | 3 / 9 |
| Test Results — Belgium (wide) 23p | ◎ | △ | ○ | △ |
| Test Results — Belgium (narrow) 18 19p | ◎ | ○ | ○ | ○ |
| Test Results — France 25p | ◎ | | ○ | △ |

FIG. 3

8